# EUROPEAN PATENT SPECIFICATION

(11) **EP 4 173 468 B1**
(45) Date of publication and mention of the grant of the patent: **10.06.2026**
(21) Application number: 22204002.4
(22) Date of filing: 27.10.2022
(51) Int. Cl.: A01D 75/18, A01D 41/12, A01D 41/127

(54) **SYSTEM AND METHOD FOR CONTROLLING COMPONENT POSITION OF AN AGRICULTURAL HARVESTER USING IMAGE DATA**
SYSTEM UND VERFAHREN ZUR STEUERUNG DER KOMPONENTENPOSITION EINER LANDWIRTSCHAFTLICHEN ERNTEMASCHINE UNTER VERWENDUNG VON BILDDATEN
SYSTÈME ET PROCÉDÉ DE COMMANDE DE POSITION DE COMPOSANT D'UNE MOISSONNEUSE AGRICOLE À L'AIDE DE DONNÉES D'IMAGE

(30) Priority: 27.10.2021 US 202117511955
(43) Date of publication of application: 03.05.2023
(73) Proprietor: CNH Industrial Belgium NV, 8210 Zedelgem (BE)
(72) Inventor: ISAAC, Nathan E., New Holland, 17557 (US)
(74) Representative: CNH Industrial IP Department

(56) References cited:
- EP-A1- 2 689 650
- EP-A2- 2 057 886
- EP-B1- 3 299 996
- WO-A1-2018/099530
- US-A1- 2006 277 884

## Description

### FIELD OF THE INVENTION

The present disclosure generally relates to agricultural harvesters and, more particularly, to systems and methods for controlling the positions of moveable components of an agricultural harvester based on captured image data.

### BACKGROUND OF THE INVENTION

An agricultural harvester is a machine used to harvest and process crops. For instance, a combine harvester may be used to harvest grain crops, such as wheat, oats, rye, barley, corn, soybeans, and flax or linseed. In general, the objective is to complete several processes, which traditionally were distinct, in one pass of the machine over a particular part of the field. In this respect, harvesters are typically equipped with a detachable header or other harvesting implement, which cuts and collects the crop from the field. The harvester also includes a crop processing system, which performs various processing operations (e.g., threshing, separating, etc.) on the harvested crop received from the harvesting implement. Furthermore, the harvester includes a crop tank, which receives and stores the harvested crop after processing.

Additionally, the harvester generally includes various components that are moveable between different positions. For example, many harvesters include a moveable residue spreader positioned at the aft end of the harvester. Upon receipt of a suitable operator input, the residue spreader can be moved from an operational position to a service position. Once at the residue spreader is at the service position, the operator can access certain internal components of the harvester for maintenance. However, if the operator forgets that an implement (e.g., a trailer, header, etc.) coupled to the aft end of the harvester for towing, the residue spreader may contact the implement when moving from the operational position to the service position. Such contact may result in damage to the residue spreader and/or the implement. Moreover, similar issues may exist for other moveable components of the harvester.

In the international patent application published as WO 2018/099530 A1 a mower is described having a safety system to prevent obstacles, such as animals, located in the field from being hit by cutters of the mower. The safety system comprises a control unit and at least one detector to detect the obstacle and then provide a warning signal to the control unit, when the obstacle is detected. The control unit provides a separation signal to at least one safety device in response to receiving the warning signal, and the at least one safety device causes separation between the obstacle and the at least one cutter in response to receiving the separation signal. The safety device may be at least one shield which is movable between a retracted position and a protecting position in which it extends in front of the at least one cutter to prevent contact between the at least one cutter and the obstacle.

Accordingly, an improved system and method for controlling component position of an agricultural harvester would be welcomed in the technology.

### SUMMARY OF THE INVENTION

Aspects and advantages of the technology will be set forth in part in the following description, or may be obvious from the description, or may be learned through practice of the technology.

In one aspect, the present subject matter is directed to an agricultural harvester including a frame and a harvester component supported relative to the frame. The agricultural harvester also includes an actuator configured to move the harvester component between a first position and a second position within a harvester component movement zone positioned adjacent to the agricultural harvester. Furthermore, the agricultural harvester includes an imaging device supported relative to the frame such that the imaging device is configured to capture image data depicting the harvester component movement zone. Additionally, the agricultural harvester includes a computing system communicatively coupled to the imaging device. In this respect, the computing system is configured to receive the image data captured by the imaging device. Moreover, the computing system is configured to determine when an object is present within the harvester component movement zone based on the received image data. In addition, when it is determined that the object is present within the harvester component movement zone, the computing system is configured to control an operation of the actuator such that contact between the harvester component and the object is prevented.

**In** another aspect, the present subject matter is directed to a system for controlling component position of an agricultural harvester. The system includes an agricultural harvester component and an actuator configured to move the agricultural harvester component between a first position and a second position within a harvester component movement zone positioned adjacent to the agricultural harvester. Furthermore, the system includes an imaging device configured to capture image data depicting the harvester component movement zone. Moreover, the system includes a computing system communicatively coupled to the imaging device. In this respect, the computing system is configured to receive the image data captured by the imaging device. Additionally, the computing system is configured to determine when an object is present within the harvester component movement zone based on the received image data. Moreover, when it is determined that the object is present within the harvester component movement zone, the computing system is configured to control an operation of the actuator such that contact between the agricultural harvester component and the object is prevented.

In a further aspect, the present subject matter is directed to a method for controlling component position of an agricultural harvester. The agricultural harvester, in turn, includes an agricultural harvester component and an actuator configured to move the agricultural harvester component between a first position and a second position within a harvester component movement zone positioned adjacent to the agricultural harvester. The method includes receiving, with a computing system, image data depicting the harvester component movement zone. In addition, the method includes determining, with the computing system, when an object is present within the harvester component movement zone based on the received image data. Furthermore, when the object is present within the harvester component movement zone, the method includes controlling, with the computing system, an operation of the actuator such that contact between the agricultural harvester component and the object is prevented.

These and other features, aspects and advantages of the present technology will become better understood with reference to the following description and appended claims. The accompanying drawings, which are incorporated in and constitute a part of this specification, illustrate embodiments of the technology and, together with the description, serve to explain the principles of the technology.

### BRIEF DESCRIPTION OF THE DRAWINGS

A full and enabling disclosure of the present technology, including the best mode thereof, directed to one of ordinary skill in the art, is set forth in the specification, which makes reference to the appended figures, in which:
FIG. 1 illustrates a partial sectional side view of one embodiment of an agricultural harvester in accordance with aspects of the present subject matter;
FIG. 2 illustrates a partial side of the agricultural harvester shown in FIG. 1, particularly illustrating a residue spreader of the harvester being moveable between an operational position and a service position within a harvester component movement zone positioned aft of the harvester;
FIG. 3 illustrates another partial side of the agricultural harvester shown in FIG. 1, particularly illustrating a crop unloading of the harvester being moveable between a folded position and an extended position within a harvester component movement zone positioned aft of the harvester;
FIG. 4 illustrates a rear view of the agricultural harvester shown in FIG. 1, particularly illustrating a ladder of the harvester being moveable between a retracted position and an extended position within a harvester component movement zone positioned aft of the harvester;
FIG. 5 illustrates a schematic view of one embodiment of a system for controlling component position of an agricultural harvester in accordance with aspects of the present subject matter;
FIG. 6 illustrates a flow diagram providing one embodiment of example control logic for controlling component position of an agricultural harvester in accordance with aspects of the present subject matter; and
FIG. 7 illustrates a flow diagram of one embodiment of a method for controlling component position of an agricultural harvester in accordance with aspects of the present subject matter.

Repeat use of reference characters in the present specification and drawings is intended to represent the same or analogous features or elements of the present technology.

### DETAILED DESCRIPTION OF THE DRAWINGS

Reference now will be made in detail to embodiments of the invention, one or more examples of which are illustrated in the drawings. Each example is provided by way of explanation of the invention, not limitation of the invention. In fact, it will be apparent to those skilled in the art that various modifications and variations can be made in the present invention. For instance, features illustrated or described as part of one embodiment can be used with another embodiment to yield a still further embodiment. Thus, it is intended that the present invention covers such modifications and variations as come within the scope of the appended claims and their equivalents.

In general, the present subject matter is directed to systems and methods for controlling component position of an agricultural harvester. As will be described below, the agricultural harvester includes one or more components that are moveable between first and second positions. As such, the harvester may also include one or more actuators configured to move these component(s) between their first and second positions within a corresponding harvester component movement zone positioned adjacent to the harvester. For example, in some embodiments, the harvester may include a residue spreader that is moveable between an operational position and a service position. Moreover, in some embodiments, the harvester may include a crop unloading tube that is moveable between folded position and an extended position. In addition, in some embodiments, the harvester may include a ladder that is moveable between a retracted position and an extended position.

In several embodiments, a computing system is configured to control the operation of the actuator(s) such that the associated moveable component(s) of the harvester do not contact any object(s) present within the harvester component movement zone(s). Specifically, in such embodiments, the computing system is configured to receive image data depicting the harvester component movement zone(s) from one or more imaging devices. The imaging device(s) is, in turn, supported on the harvester such that the harvester component movement zone(s) is positioned within the field(s) of view of the imaging device(s). When the operator of the harvester provides an input associated with moving a harvester component (e.g., the residue spreader, crop unloading tube, ladder, etc.) between its first and second positions, the computing system analyzes the received image data to determine whether any objects are present within the corresponding harvester component movement zone. Such objects may include an implement coupled to the harvester for towing (e.g., a trailer, crop cart, header, etc.), a tree, a utility pole, a building, and/or the like. When it is determined that an object(s) is present within the corresponding harvester component movement zone, the computing system may prevent or limit that movement of the harvester component to avoid contact between the harvester component and the object(s) and the requisite damage associated with such contact.

Using image data to determine when an object is present with a harvester component movement zone associated with a moveable harvester component and controlling the operation of the corresponding actuator(s) to prevent contact between the component and the object improves the operation of the harvester. Specifically, the operator may forget that a trailer or other implement is coupled to the aft end of the harvester for towing. The trailer may, in turn, be present within the movement zone of one or more components of the harvester (e.g., the residue spreader and/or the crop unloading tube). As such, if the operator were to move these components, contact with the trailer would occur. Conventional systems for detecting the presence of trailers or other implements behind the harvester rely on the performance of affirmative steps by the operator (e.g., connecting the trailer wiring harness to the harvester), which the operator may forget to do. Moreover, such conventional systems cannot detect the presence of certain environmental objects, such as trees, utility poles, buildings, and/or the like. However, by using image data captured by imaging device(s) supported on the harvester, the disclosed system and method can identify the presence of objects within the harvester component movement zone(s) that conventional systems cannot detect. Moreover, the use of image data, which is captured without any need for operator input, allows for control of the actuator(s) to prevent contact between the corresponding moveable harvester component(s) and the object(s) without the need for affirmative operator action.

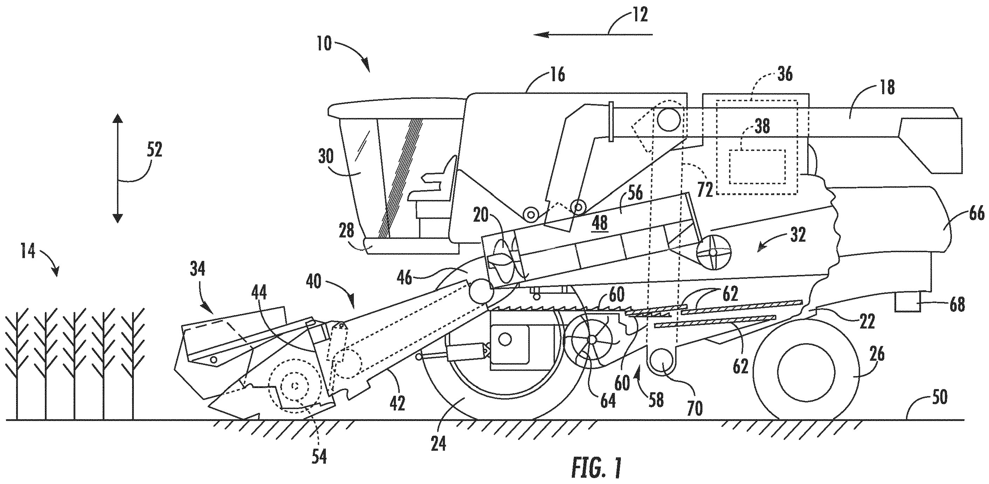

Referring now to the drawings, FIG. 1 illustrates a partial sectional side view of the agricultural harvester 10. In general, the harvester 10 may be configured to travel across a field in a forward direction of travel (indicated by arrow 12) to harvest a crop 14. While traversing the field, the harvester 10 may be configured to process and store the harvested crop within a crop tank 16 of the harvester 10. Furthermore, the harvested crop may be unloaded from the crop tank 16 for receipt by the crop receiving vehicle (not shown) via a crop unloading tube 18 of the harvester 10.

In the illustrated embodiment, the harvester 10 is configured as a rotary threshing type combine in which the harvested crop is threshed and separated while being advanced by and along a longitudinally arranged rotor 20. However, in alternative embodiments, the harvester 10 may have any other suitable harvester configuration, such as a traverse-flow type configuration.

The harvester 10 may include a chassis or main frame 22 configured to support and/or couple to various components of the harvester 10. For example, in several embodiments, the harvester 10 may include a pair of driven, front wheels 24 and a pair of steerable, rear wheels 26 coupled to the chassis 22. As such, the wheels 24, 26 may be configured to support the harvester 10 relative to the ground and move the harvester 10 in the forward direction of travel 12. Furthermore, the harvester 10 may include an operator's platform 28 having an operator's cab 30, a crop processing system 32, the crop tank 16, and the crop unloading tube 18 supported by the chassis 22. As will be described below, the crop processing system 32 may be configured to perform various processing operations on the harvested crop as the crop processing system 32 transfers the harvested crop between a harvesting implement 34 (e.g., a header) of the harvester 10 and the crop tank 16. Furthermore, the harvester 10 may include an engine 36 and a transmission 38 mounted on the chassis 22. The transmission 38 may be operably coupled to the engine 36 and may provide variably adjusted gear ratios for transferring engine power to the wheels 24 via a drive axle assembly (or via axles if multiple drive axles are employed).

Furthermore, as shown in FIG. 1, the harvester 10 includes a feeder 40 that couples to and supports the harvesting implement 34. More specifically, the feeder 40 may include a feeder housing 42 extending from the forward end 44 to an aft end 46. As will be described below, the forward end 44 of the feeder housing 42 may, in turn, be coupled to harvesting implement 34. Moreover, the aft end 46 of the feeder housing 42 may be pivotably coupled to the chassis 22 adjacent to a threshing and separating assembly 48 of the crop processing system 32. Such a pivotable coupling may permit movement of the harvesting implement 34 relative to a field surface 50 in a vertical direction (indicated by arrow 52).

As the harvester 10 is propelled in the forward direction of travel 12 over the field with the crop 14, the crop material is severed from the stubble by a cutter bar (not shown) positioned at the front of the harvesting implement 34. The crop material is delivered by a header auger 54 to the forward end 44 of the feeder housing 42, which supplies the harvested crop to the threshing and separating assembly 48. In general, the threshing and separating assembly 48 may include a cylindrical chamber 56 in which the rotor 20 is rotated to thresh and separate the harvested crop received therein. That is, the harvested crop is rubbed and beaten between the rotor 20 and the inner surfaces of the chamber 56 to loosen and separate the grain, seed, or the like from the straw.

The harvested crop separated by the threshing and separating assembly 48 may fall onto a crop cleaning assembly 58 of the crop processing system 32. In general, the crop cleaning assembly 58 may include a series of pans 60 and associated sieves 62. As such, the separated harvested crop may be spread out via the oscillation of pans 60 and/or sieves 62 and may eventually fall through apertures defined by the sieves 62. Additionally, a cleaning fan 64 may be positioned adjacent to one or more of the sieves 62 to provide an air flow through the sieves 62 that removes chaff and other impurities from the harvested crop. The impurities may be discharged from the harvester 10 through the outlet of a straw hood 66 and/or via a residue spreader 68 positioned at the back end of the harvester 10. The cleaned harvested crop passing through the sieves 62 may then fall into a trough of an auger 70, which may transfer the harvested crop to an elevator 72 for delivery to the crop tank 16.

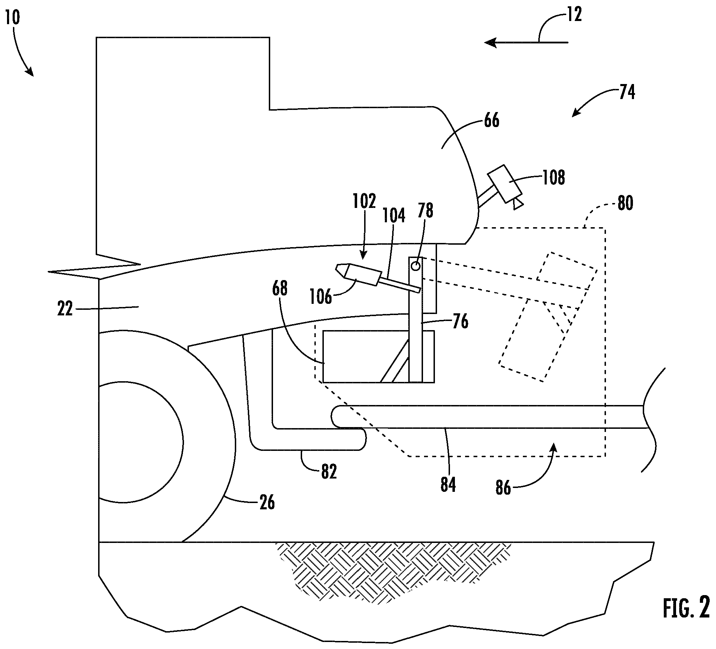

Referring now to FIG. 2, as indicated above, the harvester 10 may include a residue spreader 68 positioned at an aft end 74 of the harvester 10. In general, the residue spreader 68 is configured to distribute or otherwise disperse chaff, residue, or other impurities from the harvester 10 onto the field surface behind the harvester 10. As shown, the residue spreader 68 is coupled to one end of a pivot arm 76. The opposed end of the pivot arm 76 is, in turn, coupled to the frame 22 of the harvester 10 via a pivot joint 78. In this respect, the residue spreader 68 may be moveable relative to the frame 22 between an operational position (shown in solid lines) and a service position (shown in dashed lines) within a movement zone 80. The movement zone 80, in turn, corresponds to the three-dimensional space positioned aft of and adjacent to the aft end 74 of the harvester 10 through which the residue spreader 68 moves between the operational and service positions. When in the operational position, the residue spreader 68 is at least partially positioned under the straw hood 66 such that the residue spreader 68 is at a suitable position to receive and dispense the chaff/residue from the crop processing system 32. Conversely, when in the service position, the residue spreader 68 is pivoted upward and behind the harvester 10 to allow access for servicing of various internal components of harvester 10.

Furthermore, the harvester 10 may include one or more residue spreader actuators 102 coupled between the chassis 22 and the frame 22. In several embodiments, the residue spreader actuator(s) 102 may correspond to a fluid-driven actuator(s), such as a hydraulic or pneumatic cylinder(s). In such embodiments, a rod(s) 104 of the residue spreader actuator(s) 102 may be extended relative to an associated cylinder(s) 106 of the residue spreader actuator(s) 102 to move the residue spreader 68 to the service position. Similarly, the rod(s) 104 of the residue spreader actuator(s) 102 may be retracted relative to the associated cylinder(s) 106 of the residue spreader actuator(s) 102 to pivot the residue spreader 68 to the operational position. In this respect, the operation of the residue spreader actuator(s) 102 may be controlled to move the residue spreader 68 between the operational and service positions. However, in alternative embodiments, the residue spreader actuator(s) 102 may correspond to any other suitable type of actuator(s), such as an electric linear actuator(s).

Additionally, the residue spreader 68 may have any suitable configuration for dispensing chaff or residue received from the crop processing system 32. For example, in several embodiments, the residue spreader 68 may include one or more spreader disks (not shown) configured to rotate about a generally vertical axis (when in the operational position). Each disk may, in turn, include a plurality of spaced apart fins. Thus, in operation, chaff/residue may fall onto rotating spreader disks such that the fins direct the chaff/residue radially outward from the disk(s), thereby dispersing the chaff residue onto the field surface behind the harvester 10.

Moreover, the harvester 10 may include a hitch 82 coupled to the aft end 74 of the harvester 10. In general, the hitch 82 may be configured to couple to a tongue 84 of an implement 86 (e.g., a trailer used to tow a header, a crop cart, and/or the like). Thus, the implement 86 can be towed behind the harvester 10 as the harvester 10 travels across the field in the forward direction of travel 12. As will be described below, in certain instances, the tongue 84 of the implement 86 may be at least partially positioned within the movement zone 80 of the residue spreader 68. Thus, if the residue spreader 68 were moved from the operational position to the service position while the tongue 84 were coupled to the hitch 82, the residue spreader 68 would contact the tongue 84.

Additionally, the harvester 10 may include one or more imaging devices 108 mounted on otherwise supported thereon. In several embodiments, the imaging devices(s) 108 may be configured to capture images depicting the movement zone 80 of the residue spreader 68 during operation of the harvester 10. As will be described below, a computing system may be configured to analyze the captured images to determine when an object (e.g., the tongue 84 of the implement 86) is present within the movement zone 80. Thereafter, the residue spreader actuator(s) 102 may be controlled to prevent contact between the residue spreader 68 and the tongue 84.

**In** general, the imaging device(s) 108 may correspond to any suitable device(s) configured to capture images or other image data depicting the movement zone 80 of the residue spreader 68. For example, in one embodiment, the imaging device(s) 108 may correspond to a stereographic camera(s) configured to capture three-dimensional images of any objects present within its field of view. In other embodiments, the imaging device(s) 108 may correspond to a monocular camera(s) configured to capture two-dimensional images of any objects present within its field of view. However, in alternative embodiments, the imaging device(s) 108 may correspond to any other suitable sensing device(s) configured to capture images or image-like data, such as a LIDAR sensor(s) or a RADAR sensor(s).

The imaging device(s) 108 may be installed at any suitable location(s) such that at least a portion of the field(s) of view of the imaging device(s) 108 correspond to the movement zone 80 of the residue spreader 68. For example, in some embodiments, the imaging device(s) 108 may be mounted on the aft end 74 of the harvester 10. For example, in one embodiment, such imaging device(s) 108 may correspond to a back-up camera(s) of the harvester 10. However, in alternative embodiments, the imaging device(s) 108 may be installed at any other suitable location(s) on the harvester 10.

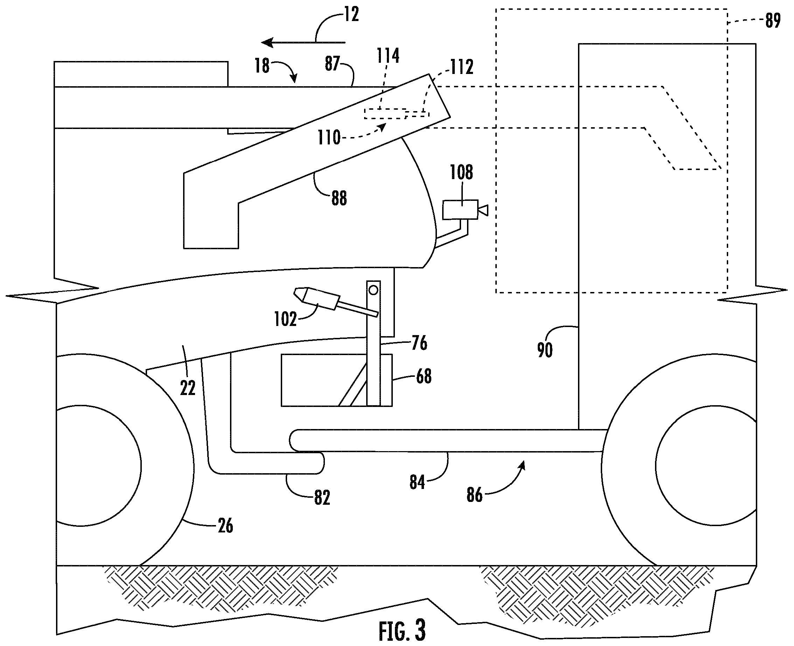

Referring now to FIG. 3, as indicated above, the harvester 10 may include a crop unloading tube 18 configured to convey harvested crops from the crop tank 16 to an adjacent crop cart (not shown). As shown, the crop unloading tube 18 includes a first tube portion 87 and a second tube portion 88 pivotably coupled to the first tube portion 87. In this respect, the crop unloading tube 18 may be moveable between a folded position (shown in solid lines) and an extended position (shown in dashed lines) within a movement zone 89. The movement zone 89, in turn, corresponds to the three-dimensional space positioned aft of and adjacent to the aft end 74 of the harvester 10 through which the second tube portion 88 moves between the folded and extended positions. When in the folded position, the second tube portion 88 is pivoted forward (thereby shortening the tube 18) such that the second tube portion 88 is aligned with the first tube portion 87 along an axis (not shown) extending parallel to the forward direction of travel 12. Conversely, when in the extended position, the second tube portion 88 is positioned aft of the first tube portion 87 relative to the forward direction of travel 12, thereby straightening and lengthening the tube 18.

Furthermore, the harvester 10 may include one or more crop unloading tube actuators 110 coupled between the first and second tube portions 87, 88. In several embodiments, the crop unloading tube actuator(s) 110 may correspond to a fluid-driven actuator(s), such as a hydraulic or pneumatic cylinder(s). In such embodiments, a rod(s) 112 of the crop unloading tube actuator(s) 110 may be extended relative to an associated cylinder(s) 114 of the crop unloading tube actuator(s) 110 to move the second tube portion 88 to the extended position. Similarly, the rod(s) 112 of the crop unloading tube actuator(s) 110 may be retracted relative to the associated cylinder(s) 114 of the crop unloading tube actuator(s) 110 to pivot the second tube portion 88 to the folded position. In this respect, the operation of the crop unloading tube actuator(s) 110 may be controlled to move the crop unloading tube 18 between the folded and retracted positions. However, in alternative embodiments, the crop unloading tube actuator(s) 110 may correspond to any other suitable type of actuator(s), such as an electric linear actuator(s).

As mentioned above, the harvester 10 may include the hitch 82 configured to couple to the tongue 84 of the implement 86. As shown, in several embodiments, the implement 86 may include implement container wall 90. For example, the implement container wall 90 may define a chamber (not shown) in which materials (e.g., harvested crops) can be stored and transported. As will be described below, in certain instances, the implement container wall 90 of the implement 86 may be at least partially positioned within the movement zone 89 of the crop unloading tube 18. Thus, if the crop unloading tube 18 were moved from the folded position to the extended position while the implement 86 is coupled to the hitch 82, the second tube portion 88 of the crop unloading tube 18 would contact the implement container wall 90.

Moreover, as mentioned above, the harvester 10 may include the imaging device(s) 108 mounted on otherwise supported thereon. **In** several embodiments, the imaging devices(s) 108 may be configured to capture images depicting the movement zone 89 of the crop unloading tube 18 during operation of the harvester 10. Thus, at least a portion of the field(s) of view of the imaging device(s) 108 may correspond to the movement zone 89 of the crop unloading tube 18. As will be described below, a computing system may be configured to analyze the captured images to determine when an object (e.g., the implement container wall 90 of the implement 86) is present within the movement zone 89. Thereafter, the crop unloading tube actuator(s) 110 may be controlled to prevent contact between the second tube portion 88 and the implement container wall 90.

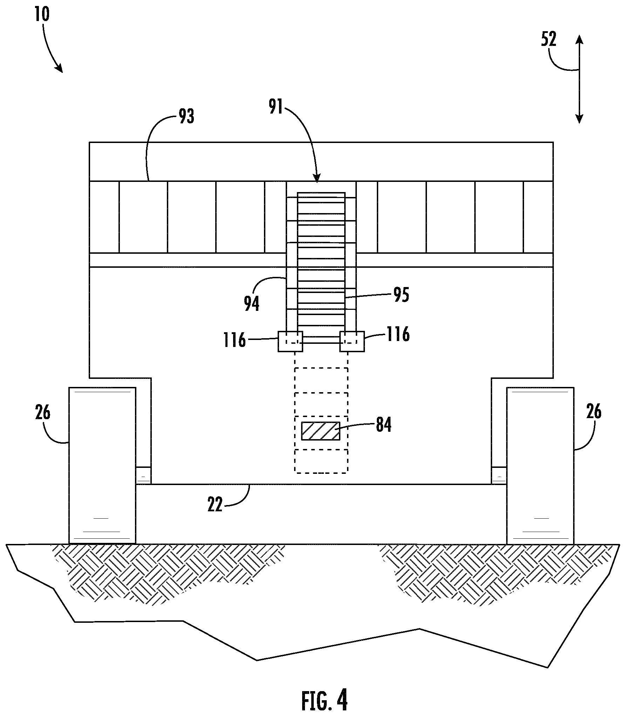

Referring now to FIG. 4, the harvester 10 may include a ladder 91 that allows the operator to access a maintenance platform 92 positioned at the aft end 74 of the harvester 10. Once on the maintenance platform 92, the operator can perform various maintenance operations on the engine 36 (FIG. 1), the cooling system (not shown), or other components positioned at the top of the aft end 74. In some embodiments, the maintenance platform 92 may be surrounded by a railing 93. Moreover, the ladder 91 may include a first ladder portion 94 and a second ladder portion 95 that is moveable relative to the first ladder portion 94 in the vertical direction 52. As such, the ladder 91 may be moveable relative to the frame 22 between a retracted position (shown in solid lines) and an extended position (shown in dashed lines). For example, the ladder 91 may generally be moveable within the movement zone 80 shown in FIG. 2. When in the retracted position, the first and second ladder portions 94, 95 are aligned in the vertical direction 52. Conversely, when in the extended position, the second ladder portion 95 is positioned below the first ladder portion 94 in the vertical direction 52, thereby allowing the operator to climb up to the maintenance platform 92.

Furthermore, the harvester 10 may include one or more ladder actuators 116 coupled between the first and second ladder portions 94, 95. In several embodiments, the ladder actuator(s) 116 may correspond to an electric motor(s). In such embodiments, the ladder actuator(s) 116 may be configured to move the second ladder portion 95 downward relative to the first ladder portion 94 in the vertical direction 52 to place the ladder 91 in the extended position. Conversely, the ladder actuator(s) 116 may be configured to move the second ladder portion 95 upward relative to the first ladder portion 94 in the vertical direction 52 to place the ladder 91 in the extended position. In this respect, the operation of the ladder actuator(s) 116 may be controlled to move the ladder 91 between the extended and retracted positions. However, in alternative embodiments, the ladder actuator(s) 116 may correspond to any other suitable type of actuator(s), such as an electric linear actuator(s) or a fluid-driven actuator(s).

Additionally, as mentioned above, the harvester 10 may include the imaging device(s) 108 configured to capture images depicting the movement zone 80 (FIG. 2) of the crop unloading tube 18 during operation of the harvester 10. In this respect, and as will be described below, a computing system may be configured to analyze the captured images to determine when an object (e.g., the tongue 84 of the implement 86) is present within the movement zone 80. Thereafter, the ladder actuator(s) 116 may be controlled to prevent contact between the second ladder portion 95 and the tongue 82.

It should be further appreciated that the configuration of the agricultural harvester 10 described above and shown in FIGS. 1-4 is provided only to place the present subject matter in an exemplary field of use. Thus, it should be appreciated that the present subject matter may be readily adaptable to any manner of agricultural harvester configuration.

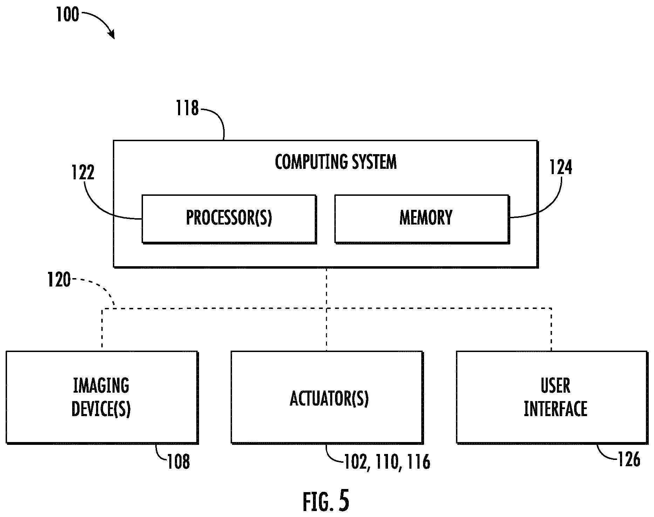

Referring now to FIG. 5, a schematic view of one embodiment of a system 100 for controlling component position of an agricultural harvester is illustrated in accordance with aspects of the present subject matter. In general, the system 100 will be described herein with reference to the agricultural harvester 10 described above with reference to FIGS. 1-4. However, it should be appreciated by those of ordinary skill in the art that the disclosed system 100 may generally be utilized with agricultural harvesters having any other suitable harvester configuration.

In several embodiments, the system 100 may one or more components of the agricultural harvester 10. For example, as shown, in some embodiments, the system 100 includes the imaging device(s) 108 and the actuator(s) 102, 110, 116.

Moreover, the system 100 includes a computing system 118 communicatively coupled to one or more components of the harvester 10 and/or the system 100 to allow the operation of such components to be electronically or automatically controlled by the computing system 118. For instance, the computing system 118 may be communicatively coupled to the imaging device(s) 108 via a communicative link 120. As such, the computing system 118 may be configured to receive image data from the imaging device(s) 108 depicting the harvester component movement zone(s) (e.g., the zones 80, 89). Furthermore, the computing system 118 may be communicatively coupled to the actuators 102, 110, 116 via the communicative link 120. In this respect, the computing system 118 may be configured to control the operation of the actuators 102, 110, 116 to move the corresponding harvester component(s) between first and second positions. In addition, the computing system 118 may be communicatively coupled to any other suitable components of the harvester 10 and/or the system 100.

In general, the computing system 118 may comprise one or more processor-based devices, such as a given controller or computing device or any suitable combination of controllers or computing devices. Thus, in several embodiments, the computing system 118 may include one or more processor(s) 122 and associated memory device(s) 124 configured to perform a variety of computer-implemented functions. As used herein, the term "processor" refers not only to integrated circuits referred to in the art as being included in a computer, but also refers to a controller, a microcontroller, a microcomputer, a programmable logic circuit (PLC), an application specific integrated circuit, and other programmable circuits. Additionally, the memory device(s) 124 of the computing system 118 may generally comprise memory element(s) including, but not limited to, a computer readable medium (e.g., random access memory RAM)), a computer readable non-volatile medium (e.g., a flash memory), a floppy disk, a compact disk-read only memory (CD-ROM), a magnetooptical disk (MOD), a digital versatile disk (DVD) and/or other suitable memory elements. Such memory device(s) 124 may generally be configured to store suitable computer-readable instructions that, when implemented by the processor(s) 122, configure the computing system 118 to perform various computer-implemented functions, such as one or more aspects of the methods and algorithms that will be described herein. In addition, the computing system 118 may also include various other suitable components, such as a communications circuit or module, one or more input/output channels, a data/control bus and/or the like.

The various functions of the computing system 118 may be performed by a single processor-based device or may be distributed across any number of processor-based devices, in which instance such devices may be considered to form part of the computing system 118. For instance, the functions of the computing system 118 may be distributed across multiple application-specific controllers or computing devices, such as a navigation controller, an engine controller, a transmission controller, and/or the like.

Furthermore, the system 100 may also include a user interface 126. More specifically, the user interface 126 may be configured to receive inputs (e.g., inputs associated with moving harvester components) from the operator. As such, the user interface 126 may include one or more input devices, such as touchscreens, keypads, touchpads, knobs, buttons, sliders, switches, mice, microphones, and/or the like, which are configured to receive inputs from the operator. The user interface 126 may, in turn, be communicatively coupled to the computing system 118 via the communicative link 120 to permit the received inputs to be transmitted from the user interface 126 to the computing system 118. In addition, some embodiments of the user interface 126 may include one or more feedback devices (not shown), such as display screens, speakers, warning lights, and/or the like, which are configured to provide feedback from the computing system 118 to the operator. In one embodiment, the user interface 126 may be mounted or otherwise positioned within the operator's cab 30 of the harvester 10. However, in alternative embodiments, the user interface 126 may mounted at any other suitable location.

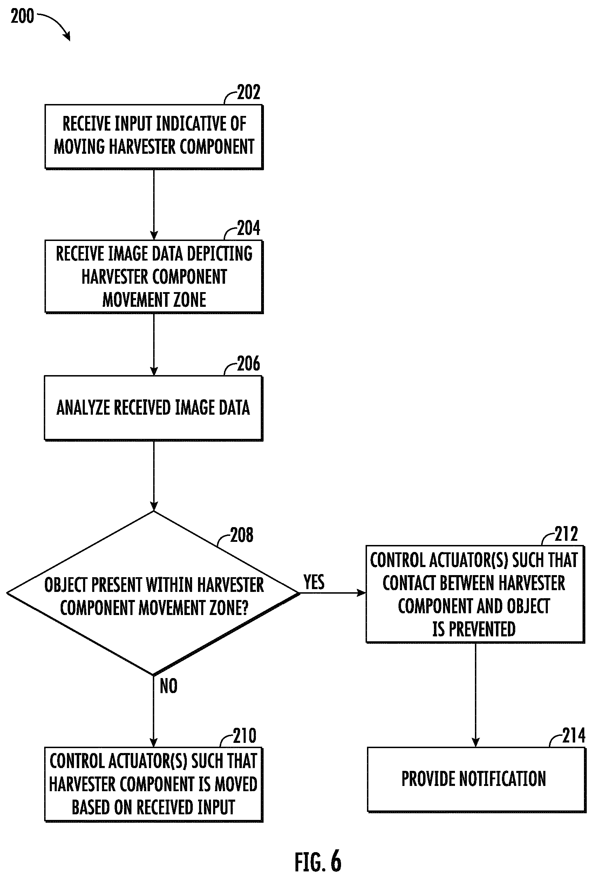

Referring now to FIG. 6, a flow diagram of one embodiment of example control logic 200 that may be executed by the computing system 118 (or any other suitable computing system) for controlling component position of an agricultural harvester is illustrated in accordance with aspects of the present subject matter. Specifically, the control logic 200 shown in FIG. 6 is representative of steps of one embodiment of an algorithm that can be executed to control component position of an agricultural harvester in a manner that prevents contact with nearby objects (e.g., implements, trees, utility poles, buildings, etc.) without requiring affirmative operator action. Thus, in several embodiments, the control logic 200 may be advantageously utilized in association with a system installed on or forming part of an agricultural harvester to allow for real-time control of harvester component without requiring substantial computing resources and/or processing time. However, in other embodiments, the control logic 200 may be used in association with any other suitable system, application, and/or the like for controlling component position of an agricultural harvester.

As shown in FIG. 6, at (202), the control logic 200 includes receiving an operator input indicative of moving an agricultural harvester component between a first position and a second position. Specifically, as mentioned above, in several embodiments, the computing system 118 may be communicatively coupled to the user interface 126 via the communicative link 120. In this respect, the operator may provide one or more inputs to the user interface 126, with such input(s) being indicative of the operator's desire to move a harvester component(s) between a first position and a second position. Thereafter, the operator input(s) may be transmitted from the user interface 126 to the computing system 118 via the communicative link 120. As will be described below, moving the harvester component(s) in accordance with the operator input(s) may, in certain instances, result in contact between such harvester component(s) and a nearby object(s) (e.g., an implement being towed by the harvester 10, a tree, a utility pole, a building, etc.). In this respect, the computing system 118 controls the operation of the actuator(s) associated with the harvester component(s) being moved to prevent such contact.

The computing system 118 may be configured to receive an input(s) indicative of moving any suitable agricultural harvester component between differing positions. For example, in certain instances, the computing system 118 may receive an input indicative of moving the residue spreader 68 from its operational position (e.g., as indicated in solid lines in FIG. 2) to its service position (e.g., as indicated in dashed lines in FIG. 2) or vice versa. Furthermore, in other instances, the computing system 118 may receive an input indicative of moving the crop unloading tube 18 from its folded position (e.g., as indicated in solid lines in FIG. 3) to its extended position (e.g., as indicated in dashed lines in FIG. 3) or vice versa. Additionally, in further instances, the computing system 118 may receive an input indicative of moving the ladder 91 from its retracted position (e.g., as indicated in solid lines in FIG. 4) to its extended position (e.g., as indicated in dashed lines in FIG. 4) or vice versa.

Moreover, at (204), the control logic 200 includes receiving image data depicting the harvester component movement zone(s) of the harvester 10. Specifically, as mentioned above, the moveable components of the harvester 10 may move between their respective first and second positions within a corresponding movement zone. For example, the residue spreader 68 and the ladder 91 may move within the movement zone 80, while the crop unloading tube 18 may move within the movement zone 89. As such, in several embodiments, the computing system 118 may be communicatively coupled to the imaging device(s) 108 via the communicative link 120. Each imaging device 108 may, in turn, be configured to capture images or other image data depicting a corresponding harvester component movement zone. In this respect, during operation of the harvester 10, the computing system 118 may receive image data from the imaging device(s) 108 via the communicative link 120.

In addition, at (206), the control logic 200 includes analyzing the received image data to determine when an object is present within the harvester component movement zone(s). More specifically, after receipt of the operator input(s) at (202), the computing system 118 may analyze the received image data depicting the harvester component movement zone associated with the received operator input(s) to identify any objects present therein. For example, when the operator input(s) received at (202) is indicative of moving the residue spreader 68 and/or the ladder 91, the computing system 118 may analyze the image data depicting the movement zone 80. Alternatively, when the operator input(s) received at (202) is indicative of moving the crop unloading tube 18, the computing system 118 may analyze the image data depicting the movement zone 89. The computing system 118 may use any suitable image processing techniques to identify objects depicted within the image data that the corresponding harvester component may contact during movement.

At (206), the computing system 118 may identify any suitable objects present within the harvester component movement zone(s). For example, in some embodiments, the computing system 118 may be configured to identify or otherwise determine when an implement (e.g., a trailer, crop cart, header, etc.) is coupled to the hitch 82 for towing. Additionally, or alternatively, the computing system 118 may identify environmental objects (e.g., trees, utility poles, buildings, etc.) present within the harvester movement zone(s).

Furthermore, at (208), the control logic 200 include determining when an object is present within the harvester component movement zone(s). When it is determined that no objects are present within the harvester component movement zone(s) depicted within the image data analyzed at (208), the control logic 200 proceeds to (210). Conversely, when it is determined that one or more objects are present within the harvester component movement zone(s) depicted within the image data analyzed at (208), the control logic 200 proceeds to (212).

As shown, at (210), the control logic 200 includes controlling the operation of an actuator(s) of the agricultural harvester such the harvester component(s) is moved based on the received operator input(s). Specifically, when it is determined that no objects are present within a harvester component movement zone, the corresponding harvester component(s) can be moved within the zone from its first position to its second position without contact any object that may cause damage. **In** this respect, when it is determined that no objects are present within the harvester component movement zone(s) associated with the received operator input(s), the computing system 118 may control the operation of the associated actuator(s) (e.g., the actuator(s) 102, 110, 116) in accordance with the operator input(s). For example, when an input is received at (202) indicative of movement of the residue spreader 68 from its operational position to its service position and it is determined that the no objects (e.g., the implement tongue 84) are present within the movement zone 80 at (206), the computing system 118 may control the operation of the residue spreader actuator(s) 102 such that the residue spreader 68 from its operational position to its service position.

Conversely, at (212), the control logic 200 includes controlling the operation of the actuator(s) of the agricultural harvester such that contact between the agricultural harvester component and the object is prevented. Specifically, when it is determined that an object(s) is present within a harvester component movement zone, the harvester component(s) moving within that movement zone may contact the object(s) during movement, thereby damaging the component(s) or the object(s). In this respect, when it is determined that an object is present within the harvester component movement zone(s) associated with the received operator input(s), the computing system 118 may control the operation of the associated actuator(s) (e.g., the actuator(s) 102, 110, 116) such that contact between the harvester component(s) and the object(s) is prevented. For example, when an input is received at (202) indicative of movement of the residue spreader 68 from its operational position to its service position and it is determined that an object(s) (e.g., the implement tongue 84) are present within the movement zone 80 at (206), the computing system 118 may control the operation of the residue spreader actuator(s) 102 to prevent contact between the residue spreader 68 and object(s).

At (212), the computing system 118 may control the operation of the actuator(s) in any suitable manner to prevent contact between the harvester component(s) and the identified object(s). For example, in some embodiments, at (212), the computing system 118 may be configured to control the operation of the actuator(s) (e.g., the actuator(s) 102, 110, 116) such that movement of the harvester component(s) is prevented. Alternatively, at (212), the computing system 118 may be configured to control the operation of the actuator(s) (e.g., the actuator(s) 102, 110, 116) such that movement of the harvester component(s) is limited. In such instances, the computing system 118 may control the operation of the actuator(s) such that the harvester component(s) is moved from its first or second position to a third position. The third position may, in turn, be an intermediate position located between the first and second positions.

Additionally, at (214), the control logic 200 includes initiating notification of the operator of the agricultural harvester that an object is present within the harvester component movement zone. Specifically, in some embodiments, when it is determined that an object is present within the harvester component movement zone(s) associated with the received operator input(s), the computing system 118 may initiate notification of the operator of the agricultural harvester 10. For example, in such instances, the computing system 118 may transmit control signals to the user interface 126 instructing the user interface 126 to present a visual and/or audible notification or indicator to the operator. Thereafter, the operator can remove the object(s) from the movement zone(s) (e.g., decouple the implement 86 from the hitch 82) and/or move the harvester 10 (e.g., such that an environmental object is no longer present within the movement zone). In some embodiments, the operator may have the option to manually override the control of the actuator(s) at (212).

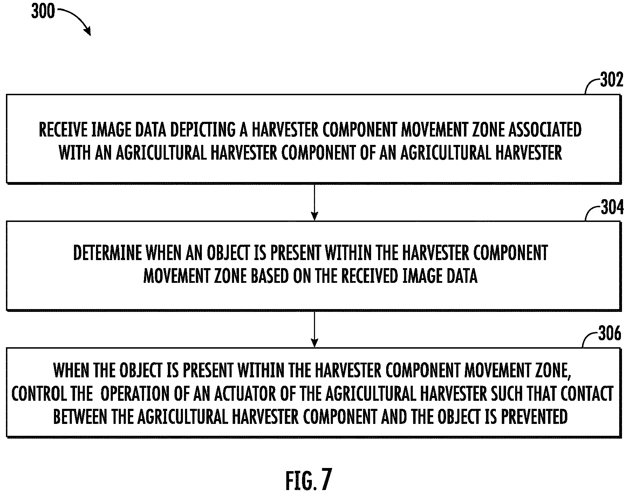

Referring now to FIG. 7, a flow diagram of one embodiment of a method 300 for controlling component position of an agricultural harvester is illustrated in accordance with aspects of the present subject matter. In general, the method 300 will be described herein with reference to the agricultural harvester 10 and the system 100 described above with reference to FIGS. 1-6. However, it should be appreciated by those of ordinary skill in the art that the disclosed method 300 may generally be implemented with any agricultural harvesters having any suitable harvester configuration and/or any system having any suitable system configuration. In addition, although FIG. 7 depicts steps performed in a particular order for purposes of illustration and discussion, the methods discussed herein are not limited to any particular order or arrangement. One skilled in the art, using the disclosures provided herein, will appreciate that various steps of the methods disclosed herein can be omitted, rearranged, combined, and/or adapted in various ways without deviating from the scope of the present disclosure.

As shown in FIG. 7, at (302), the method 300 may include receiving, with a computing system, image data depicting a harvester component movement zone associated with an agricultural harvester component of an agricultural harvester. For instance, as described above, the computing system 100 may be configured to image data from the imaging device(s) 108. The imaging device(s) 108 may, in turn, be configured to capture image data depicting the movement zones (e.g., the zones 80, 89) associated with the residue spreader 68, the crop unloading tube 18, and/or the ladder 91.

Additionally, at (304), the method 300 may include determining, with the computing system, when an object is present within the harvester component movement zone based on the received image data. For instance, as described above, the computing system 100 may be configured to analyze the received image data to determine when an object (e.g., an implement, tree, utility pole, building, etc.) is present within the harvester component movement zones (e.g., the zones 80, 89).

Moreover, at (306), when the object is present within the harvester component movement zone, the method 300 may include controlling, with the computing system, the operation of an actuator of the agricultural harvester such that contact between the agricultural harvester component and the object is prevented. For instance, as described above, when the object is present within the harvester component movement zone, the computing system 100 may be configured to control the operation of the actuators 102, 110, 116 of the agricultural harvester 10 such that contact between the agricultural harvester component (e.g., the residue spreader 68, the crop unloading tube 18, and/or the ladder 91) and the object (e.g., the implement, tree, utility pole, building, etc.) is prevented.

It is to be understood that the steps of the control logic 200 and the method 300 are performed by the computing system 118 upon loading and executing software code or instructions which are tangibly stored on a tangible computer readable medium, such as on a magnetic medium, e.g., a computer hard drive, an optical medium, e.g., an optical disc, solid-state memory, e.g., flash memory, or other storage media known in the art. Thus, any of the functionality performed by the computing system 118 described herein, such as the control logic 200 and the method 300, is implemented in software code or instructions which are tangibly stored on a tangible computer readable medium. The computing system 118 loads the software code or instructions via a direct interface with the computer readable medium or via a wired and/or wireless network. Upon loading and executing such software code or instructions by the computing system 118, the computing system 118 may perform any of the functionality of the computing system 118 described herein, including any steps of the control logic 200 and the method 300 described herein.

The term "software code" or "code" used herein refers to any instructions or set of instructions that influence the operation of a computer or controller. They may exist in a computer-executable form, such as machine code, which is the set of instructions and data directly executed by a computer's central processing unit or by a controller, a human-understandable form, such as source code, which may be compiled in order to be executed by a computer's central processing unit or by a controller, or an intermediate form, such as object code, which is produced by a compiler. As used herein, the term "software code" or "code" also includes any human-understandable computer instructions or set of instructions, e.g., a script, that may be executed on the fly with the aid of an interpreter executed by a computer's central processing unit or by a controller.

This written description uses examples to disclose the technology, including the best mode, and also to enable any person skilled in the art to practice the technology, including making and using any devices or systems and performing any incorporated methods. The patentable scope of the technology is defined by the claims, and may include other examples that occur to those skilled in the art. Such other examples are intended to be within the scope of the claims if they include structural elements that do not differ from the literal language of the claims, or if they include equivalent structural elements with insubstantial differences from the literal language of the claims.

## Claims

1. A system (100) for controlling component position of an agricultural harvester (10), the system (100) comprising an agricultural harvester component (18, 68, 91) and an actuator (102, 110, 116) configured to move the agricultural harvester component (18, 68, 91) between a first position and a second position within a harvester component movement zone (80, 89) positioned adjacent to the agricultural harvester (10), the system (100) comprising:
an imaging device (108) configured to capture image data depicting the harvester component movement zone (80, 89); and
a computing system (118) communicatively coupled to the imaging device (108), the computing system (118) configured to:
receive the image data captured by the imaging device (108);
receive an operator input indicative of moving the agricultural harvester component (18, 68, 91) between the first position and the second position;
after receipt of the operator input, analyze the received image data to determine when an object is present within the harvester component movement zone (80, 89) based on the received image data; and
when it is determined that the object is present within the harvester component movement zone (80, 89), control an operation of the actuator (102, 110, 116) such that movement of the agricultural harvester component (18, 68, 91) is prevented and contact between the agricultural harvester component (18, 68, 91) and the object is prevented.

2. The system (100) as in claim 1, wherein, when controlling the operation of the actuator (102, 110, 116), the computing system (118) is configured to control the operation of the actuator (102, 110, 116) such that the agricultural harvester component (18, 68, 91) is moved between the first position or the second position and a third position located between the first and second positions.

3. The system (100) as in any preceding claim, wherein the harvester component movement zone (80, 89) is positioned aft of the agricultural harvester (10) relative to a forward direction of travel of the agricultural harvester (10).

4. The system (100) as in any preceding claim, wherein the agricultural harvester component (18, 68, 91) comprises a residue spreader (68), the actuator (102) being configured to move the residue spreader (68) between an operational position and a service position.

5. The system (100) as in any of claims 1 through 3, wherein the residue spreader comprises a crop unloading tube (18), the actuator (110) being configured to move the crop unloading tube (18) between a folded position and an extended position.

6. The system (100) as in any of claims 1 through 3, wherein the agricultural harvester component (18, 68, 91) comprises a ladder (91), the actuator (116) being configured to move the ladder (91) between a retracted position and an extended position.

7. The system (100) as in any preceding claim, wherein, when determining when an object is present within the harvester component movement zone (80, 89), the computing system (118) is configured to determine when an implement (86) being towed by the agricultural harvester (10) is present within the harvester component movement zone (80, 89) based on the received image data.

8. The system (100) as in any preceding claim, wherein, when it is determined that the object is present within the harvester component movement zone (80, 89), the computing system (118) is further configured to initiate notification of an operator of the agricultural harvester (10) that the object is present within the harvester component movement zone (80, 89).

9. A method (300) for controlling component position of an agricultural harvester (10), the agricultural harvester (10) including an agricultural harvester component (18, 68, 91) and an actuator (102, 110, 116) configured to move the agricultural harvester component (18, 68, 91) between a first position and a second position within a harvester component movement zone (80, 89) positioned adjacent to the agricultural harvester (10), the method (300) comprising:
receiving, with a computing system (118), image data depicting the harvester component movement zone (80, 89);
receiving, with the computing system (118), an operator input indicative of moving the agricultural harvester component (18, 68, 91) between the first position and the second position;
after receipt of the operator input, with the computing system (118), analyzing the received image data to determine when an object is present within the harvester component movement zone (80, 89) based on the received image data; and
when the object is present within the harvester component movement zone (80, 89), controlling, with the computing system (118), an operation of the actuator (102, 110, 116) such that movement of the agricultural harvester component (18, 68, 91) is prevented and contact between the agricultural harvester component (18, 68, 91) and the object is prevented.

10. The method (300) as in claim 9, wherein determining when the object is present within the harvester component movement zone (80, 89) comprises:
receiving, with the computing system (118), an operator input indicative of moving the agricultural harvester component (18, 68, 91) between the first position and the second position; and
after receipt of the operator input, analyzing, with the computing system (118), the received image data to determine when the object is present within the harvester component movement zone (80, 89).

11. The method (300) as in claim 9 or 10, wherein the agricultural harvester component (18, 68, 91) comprises a residue spreader (68), the actuator (102) being configured to move the residue spreader (68) between an operational position and a service position.

12. The method (300) as in claim 9 or 10, wherein the agricultural harvester component (18, 68, 91) comprises a crop unloading tube (18), the actuator (110) being configured to move the crop unloading tube (18) between a folded position and an extended position.

13. The method (300) as in claim 9 or 10, wherein the agricultural harvester component (18, 68, 91) comprises a ladder (91), the actuator (116) being configured to move the ladder (91) between a retracted position and an extended position.

## Patentansprüche

1. System (100) zur Steuerung der Komponentenposition eines landwirtschaftlichen Erntegeräts (10), das System (100) umfassend eine landwirtschaftliche Erntegerätkomponente (18, 68, 91) und einen Aktuator (102, 110, 116), der konfiguriert ist, um die landwirtschaftliche Erntegerätkomponente (18, 68, 91) zwischen einer ersten Position und einer zweiten Position innerhalb einer Erntemaschinenkomponenten-Bewegungszone (80, 89) zu bewegen, die angrenzend an das landwirtschaftliche Erntegerät (10) positioniert ist, das System (100) umfassend:
eine Bildgebungsvorrichtung (108), die konfiguriert ist, um Bilddaten zu erfassen, die die Erntemaschinenkomponenten-Bewegungszone (80, 89) darstellen; und
ein Rechensystem (118), das kommunikativ an die Bildgebungsvorrichtung (108) gekoppelt ist, wobei das Rechensystem (118) konfiguriert ist zum:
Empfangen der von der Bildgebungsvorrichtung (108) erfassten Bilddaten;
Empfangen einer Bedienereingabe, die das Bewegen der landwirtschaftlichen Erntemaschinenkomponente (18, 68, 91) zwischen der ersten Position und der zweiten Position anzeigt;
nach Empfangen der Bedienereingabe, Analysieren der empfangenen Bilddaten, um zu bestimmen, wann sich ein Objekt innerhalb der Erntemaschinenkomponenten-Bewegungszone (80, 89) basierend auf den empfangenen Bilddaten befindet; und
wenn bestimmt wird, dass sich das Objekt innerhalb der Erntemaschinenkomponenten-Bewegungszone (80, 89) befindet, Steuern einer Betätigung des Aktuators (102, 110, 116) derart, dass eine Bewegung der landwirtschaftlichen Erntemaschinenkomponente (18, 68, 91) verhindert wird und ein Kontakt zwischen der landwirtschaftlichen Erntemaschinenkomponente (18, 68, 91) und dem Objekt verhindert wird.

2. System (100) nach Anspruch 1, wobei das Rechensystem (118) beim Steuern des Betriebs des Aktuators (102, 110, 116) konfiguriert ist, den Betrieb des Aktuators (102, 110, 116) so zu steuern, dass die landwirtschaftliche Erntemaschinenkomponente (18, 68, 91) zwischen der ersten Position oder der zweiten Position und einer dritten Position, die zwischen der ersten und zweiten Position angeordnet ist, bewegt wird.

3. System (100) nach einem der vorhergehenden Ansprüche, wobei die Erntemaschinenkomponenten-Bewegungszone (80, 89) achtern der landwirtschaftlichen Erntemaschine (10) relativ zu einer Vorwärtsfahrtrichtung der landwirtschaftlichen Erntemaschine (10) positioniert ist.

4. System (100) nach einem der vorhergehenden Ansprüche, wobei die landwirtschaftliche Erntemaschinenkomponente (18, 68, 91) einen Rückstandsstreuer (68) umfasst, wobei der Aktuator (102) konfiguriert ist, um den Rückstandsstreuer (68) zwischen einer Betriebsposition und einer Serviceposition zu bewegen.

5. System (100) nach einem der Ansprüche 1 bis 3, wobei der Rückstandsverteiler ein Erntegut-Entladerohr (18) umfasst, wobei der Aktuator (110) konfiguriert ist, um das Erntegut-Entladerohr (18) zwischen einer eingeklappten Position und einer ausgefahrenen Position zu bewegen.

6. System (100) nach einem der Ansprüche 1 bis 3, wobei die landwirtschaftliche Erntemaschinenkomponente (18, 68, 91) eine Leiter (91) umfasst, wobei der Aktuator (116) konfiguriert ist, um die Leiter (91) zwischen einer eingefahrenen Position und einer ausgefahrenen Position zu bewegen.

7. System (100) nach einem der vorhergehenden Ansprüche, wobei das Rechensystem (118) beim Bestimmen, wann sich ein Objekt innerhalb der Erntemaschinenkomponenten-Bewegungszone (80, 89) befindet, konfiguriert ist, um basierend auf den empfangenen Bilddaten zu bestimmen, wann sich ein von der landwirtschaftlichen Erntemaschine (10) gezogenes Gerät (86) innerhalb der Erntemaschinenkomponenten-Bewegungszone (80, 89) befindet.

8. System (100) nach einem der vorhergehenden Ansprüche, wobei, wenn bestimmt wird, dass sich das Objekt innerhalb der Erntemaschinenkomponenten-Bewegungszone (80, 89) befindet, das Rechensystem (118) ferner konfiguriert ist, um eine Benachrichtigung eines Bedieners der landwirtschaftlichen Erntemaschine (10) zu veranlassen, dass sich das Objekt innerhalb der Erntemaschinenkomponenten-Bewegungszone (80, 89) befindet.

9. Verfahren (300) zur Steuerung der Komponentenposition einer landwirtschaftlichen Erntemaschine (10), wobei die landwirtschaftliche Erntemaschine (10) eine landwirtschaftliche Erntemaschinenkomponente (18, 68, 91) und einen Aktuator (102, 110, 116) umfasst, der konfiguriert ist, um die landwirtschaftliche Erntemaschinenkomponente (18, 68, 91) zwischen einer ersten Position und einer zweiten Position innerhalb einer Erntemaschinenkomponenten-Bewegungszone (80, 89) zu bewegen, die angrenzend an die landwirtschaftliche Erntemaschine (10) positioniert ist, das Verfahren (300) umfassend:
Empfangen, mit einem Rechensystem (118), von Bilddaten, die die Bewegungszone der Erntemaschinenkomponente (80, 89) darstellen;
Empfangen, mit dem Rechensystem (118), einer Bedienereingabe, die das Bewegen der landwirtschaftlichen Erntemaschinen-Komponente (18, 68, 91) zwischen der ersten Position und der zweiten Position anzeigt;
nach Empfangen der Bedienereingabe, mit dem Rechensystem (118), Analysieren der empfangenen Bilddaten, um zu bestimmen, wann sich ein Objekt innerhalb der Erntemaschinenkomponenten-Bewegungszone (80, 89) befindet, basierend auf den empfangenen Bilddaten; und
wenn sich das Objekt innerhalb der Erntemaschinenkomponenten-Bewegungszone (80, 89) befindet, Steuern, mit dem Rechensystem (118), eines Betriebs des Aktuators (102, 110, 116) derart, dass eine Bewegung der landwirtschaftlichen Erntemaschinen-Komponente (18, 68, 91) verhindert wird und ein Kontakt zwischen der landwirtschaftlichen Erntemaschinenkomponente (18, 68, 91) und dem Objekt verhindert wird.

10. Verfahren (300) nach Anspruch 9, wobei das Bestimmen, wann sich das Objekt innerhalb der Erntemaschinenkomponenten-Bewegungszone (80, 89) befindet, umfasst:
Empfangen, mit dem Rechensystem (118), einer Bedienereingabe, die das Bewegen der landwirtschaftlichen Erntemaschinen-Komponente (18, 68, 91) zwischen der ersten Position und der zweiten Position anzeigt; und
nach Empfangen der Bedienereingabe, Analysieren, mit dem Rechensystem (118), der empfangenen Bilddaten, um zu bestimmen, wann sich das Objekt innerhalb der Erntemaschinenkomponenten-Bewegungszone (80, 89) befindet.

11. Verfahren (300) nach Anspruch 9 oder 10, wobei die landwirtschaftliche Erntemaschinenkomponente (18, 68, 91) einen Rückstandsstreuer (68) umfasst, wobei der Aktuator (102) konfiguriert ist, um den Rückstandsstreuer (68) zwischen einer Betriebsposition und einer Serviceposition zu bewegen.

12. Verfahren (300) nach Anspruch 9 oder 10, wobei die landwirtschaftliche Erntemaschinenkomponente (18, 68, 91) ein Erntegut-Entladerohr (18) umfasst, wobei der Aktuator (110) konfiguriert ist, um das Erntegut-Entladerohr (18) zwischen einer eingeklappten Position und einer ausgefahrenen Position zu bewegen.

13. Verfahren (300) nach Anspruch 9 oder 10, wobei die landwirtschaftliche Erntemaschinenkomponente (18, 68, 91) eine Leiter (91) umfasst, wobei der Aktuator (116) konfiguriert ist, um die Leiter (91) zwischen einer eingefahrenen Position und einer ausgefahrenen Position zu bewegen.

## Revendications

1. Système (100) permettant de commander une position de composant d'une moissonneuse agricole (10), le système (100) comprenant un composant de moissonneuse agricole (18, 68, 91) et un actionneur (102, 110, 116) conçu pour déplacer le composant de moissonneuse agricole (18, 68, 91) entre une première position et une seconde position à l'intérieur d'une zone de déplacement de composant de moissonneuse (80, 89) positionnée adjacente à la moissonneuse agricole (10), le système (100) comprenant :
un dispositif d'imagerie (108) configuré pour capturer des données d'image illustrant la zone de déplacement de composant de moissonneuse (80, 89) ; et
un système informatique (118) couplé en communication au dispositif d'imagerie (108), le système informatique (118) étant configuré pour :
recevoir les données d'image capturées par le dispositif d'imagerie (108) ;
recevoir une entrée d'opérateur indiquant le déplacement du composant de moissonneuse agricole (18, 68, 91) entre la première position et la seconde position ;
après réception de l'entrée d'opérateur, analyser les données d'image reçues pour déterminer quand un objet est présent dans la zone de déplacement de composant de moissonneuse (80, 89) sur la base des données d'image reçues ; et
lorsqu'il est déterminé que l'objet est présent dans la zone de déplacement de composant de moissonneuse (80, 89), commander un fonctionnement de l'actionneur (102, 110, 116) de sorte que le mouvement du composant de moissonneuse agricole (18, 68, 91) soit empêché et qu'un contact entre le composant de moissonneuse agricole (18, 68, 91) et l'objet soit empêché.

2. Système (100) selon la revendication 1, dans lequel, lors de la commande du fonctionnement de l'actionneur (102, 110, 116), le système informatique (118) est configuré pour commander le fonctionnement de l'actionneur (102, 110, 116) de telle sorte que le composant de moissonneuse agricole (18, 68, 91) est déplacé entre la première position ou la deuxième position et une troisième position située entre les première et deuxième positions.

3. Système (100) selon l'une quelconque revendication précédente, dans lequel la zone de déplacement de composant de moissonneuse (80, 89) est positionnée à l'arrière de la moissonneuse agricole (10) par rapport à une direction de déplacement vers l'avant de la moissonneuse agricole (10).

4. Système (100) selon l'une quelconque revendication précédente, dans lequel le composant de moissonneuse agricole (18, 68, 91) comprend un épandeur de résidus (68), l'actionneur (102) étant conçu pour déplacer l'épandeur de résidus (68) entre une position opérationnelle et une position d'entretien.

5. Système (100) selon l'une quelconque des revendications 1 à 3, dans lequel l'épandeur de résidus comprend un tube de déchargement de récolte (18), l'actionneur (110) étant conçu pour déplacer le tube de déchargement de récolte (18) entre une position pliée et une position déployée.

6. Système (100) selon l'une quelconque des revendications 1 à 3, dans lequel le composant de moissonneuse agricole (18, 68, 91) comprend une échelle (91), l'actionneur (116) étant conçu pour déplacer l'échelle (91) entre une position rentrée et une position déployée.

7. Système (100) selon l'une quelconque revendication précédente, dans lequel, lors de la détermination de la présence d'un objet dans la zone de déplacement de composant de moissonneuse (80, 89), le système informatique (118) est configuré pour déterminer quand un outil (86) étant remorqué par la moissonneuse agricole (10) est présent dans la zone de déplacement de composant de moissonneuse (80, 89) sur la base des données d'image reçues.

8. Système (100) selon l'une quelconque revendication précédente, dans lequel, lorsqu'il est déterminé que l'objet est présent dans la zone de déplacement de composant de moissonneuse (80, 89), le système informatique (118) est en outre configuré pour initier une notification d'un opérateur de la moissonneuse agricole (10) quant au fait que l'objet est présent dans la zone de déplacement de composant de moissonneuse (80, 89).

9. Procédé (300) permettant de commander une position de composant d'une moissonneuse agricole (10), la moissonneuse agricole (10) comportant un composant de moissonneuse agricole (18, 68, 91) et un actionneur (102, 110, 116) conçu pour déplacer le composant de moissonneuse agricole (18, 68, 91) entre une première position et une seconde position à l'intérieur d'une zone de déplacement de composant de moissonneuse (80, 89) positionnée adjacente à la moissonneuse agricole (10), le procédé (300) comprenant :
la réception, avec un système informatique (118), de données d'image représentant la zone de déplacement de composant de moissonneuse (80, 89) ;
la réception, avec le système informatique (118), d'une entrée d'opérateur indiquant le déplacement du composant de moissonneuse agricole (18, 68, 91) entre la première position et la seconde position ;
après réception de l'entrée d'opérateur, avec le système informatique (118), l'analyse des données d'image reçues pour déterminer quand un objet est présent dans la zone de déplacement de composant de moissonneuse (80, 89) sur la base des données d'image reçues ; et
lorsque l'objet est présent dans la zone de déplacement de composant de moissonneuse (80, 89), la commande, avec le système informatique (118), d'un fonctionnement de l'actionneur (102, 110, 116) de sorte que le mouvement du composant de moissonneuse agricole (18, 68, 91) soit empêché et que le contact entre le composant de moissonneuse agricole (18, 68, 91) et l'objet soit empêché.

10. Procédé (300) selon la revendication 9, dans lequel la détermination du moment où l'objet est présent dans la zone de déplacement de composant de moissonneuse (80, 89) comprend :
la réception, avec le système informatique (118), d'une entrée d'opérateur indiquant le déplacement du composant de moissonneuse agricole (18, 68, 91) entre la première position et la seconde position ; et
après réception de l'entrée d'opérateur, l'analyse, avec le système informatique (118), des données d'image reçues pour déterminer quand l'objet est présent dans la zone de déplacement de composant de moissonneuse (80, 89).

11. Système (300) selon la revendication 9 ou 10, dans lequel le composant de moissonneuse agricole (18, 68, 91) comprend un épandeur de résidus (68), l'actionneur (102) étant conçu pour déplacer l'épandeur de résidus (68) entre une position opérationnelle et une position d'entretien.

12. Procédé (300) selon la revendication 9 ou 10, dans lequel le composant de moissonneuse agricole (18, 68, 91) comprend un tube de déchargement de récolte (18), l'actionneur (110) étant conçu pour déplacer le tube de déchargement de récolte (18) entre une position pliée et une position déployée.

13. Procédé (300) selon la revendication 9 ou 10, dans lequel le composant de moissonneuse agricole (18, 68, 91) comprend une échelle (91), l'actionneur (116) étant conçu pour déplacer l'échelle (91) entre une position rentrée et une position déployée.
